(19) Europäisches Patentamt
European Patent Office
Office européen des brevets

(11) **EP 4 729 988 A1**

(12) **EUROPEAN PATENT APPLICATION**

(43) Date of publication:
**22.04.2026  Bulletin 2026/17**

(21) Application number: **25203232.1**

(22) Date of filing: **19.09.2025**

(51) International Patent Classification (IPC):
**G01S 13/90** (2006.01)

(52) Cooperative Patent Classification (CPC):
**G01S 7/417; G01S 13/9011; G01S 13/9089**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.10.2024  IN 202421079087**

(71) Applicant: **Tata Consultancy Services Limited Mumbai, Maharashtra 400 021 (IN)**

(72) Inventors:
• **ROKKAM, Krishna Kanth**
  **560066 Bengaluru, Karnataka (IN)**

• **GIGIE, Andrew**
  **560066 Bengaluru, Karnataka (IN)**
• **KUMAR, Achanna Anil**
  **560066 Bengaluru, Karnataka (IN)**
• **CHAKRAVARTY, Tapas**
  **700160 Kolkata, West Bengal (IN)**
• **PAL, Arpan**
  **700160 Kolkata, West Bengal (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR LOCAL INTERPOLATION FUNCTION BASED SAR IMAGING FOR IRREGULAR SCANNING GEOMETRIES**

(57)    This disclosure relates generally to a method and system for local interpolation function (LIF) based synthetic aperture radar (SAR) imaging for irregular scanning geometries. Current available methods are computationally expensive, sensitive to initialization and lacks generalization, particularly when applied across sampling schemes in continuous sampling scale scenarios which is a key characteristic of irregular scanning geometries. The present disclosure achieves enhanced SAR image across various spatial coordinates.

Noisy SAR images are obtained using Non-uniform Fast Fourier Transform (NUFFT) based Range Migration Algorithm (RMA). The noisy SAR image is mapped into a LIF feature map using an encoder of a trained LIF neural network. An enhanced SAR image is further predicted based on the LIF feature map using a decoder of the LIF neural network. The disclosed method for SAR image enhancement using LIF neural network is used for supply chain management, airport security screening, medical imaging and so on.

FIG. 5

EP 4 729 988 A1

**Description**

CROSS-REFERENCE TO RELATED APPLICATIONS AND PRIORITY

The present application claims priority to Indian application no. 202421079087, filed on October 17, 2024.

TECHNICAL FIELD

The disclosure herein generally relates to synthetic aperture radar image reconstruction, and, more particularly, to a method and system for local interpolation function-based SAR imaging for irregular scanning geometries.

BACKGROUND

Microwave Imaging (MWI) is rapidly gaining traction across diverse fields related to concealed imaging, including supply chain management, airport security screening, and medical imaging. This is attributed due to its advantages such as compact design, robust penetration capabilities, integrated safety features, and cost-effectiveness. Nowadays, compact millimeter wave (mmWave) radar technology is available in the market and has been integrated into prominent consumer devices like the Google Pixel etc. Recent literature has explored the use of compact mm Wave radars for freehand Synthetic Aperture Radar (SAR) imaging applications in particular for the above mentioned concealed imaging scenarios.

Freehand SAR imaging utilizes a handheld scanner equipped with mmWave radar to collect data through irregular scanning trajectories, while concurrently tracking the radar's location. Recent research has primarily focused on achieving precise radar localization using additional sensors. However, only fewer studies have explored the important problem of efficient image reconstruction with such irregular scanning trajectories. Two significant challenges remain in image reconstruction with such freehand SAR. Firstly, data acquisition is non-uniform and can also be under sampled due to irregular scanning trajectory. Secondly, variability in reflectivity introduces inherent limitations in image quality. Consequently, there exist significant gaps in enhancing and optimizing image reconstruction performance for such irregular scanning geometries.

Typically, the Range Migration Algorithm (RMA) is employed for efficient MWI reconstruction from SAR data. However, due to the non-uniform data acquisition, the classical RMA using the standard Fast Fourier Transform (FFT) is not suitable. Hence Non-uniform Fast Fourier Transform (NUFFT) based RMA (NUFFT-RMA) is used for SAR image reconstruction to handle such scenarios. But applying NUFFT-RMA results in several artifacts. Of late, Deep learning (DL) based image enhancements are employed to overcome such artifacts and to compensate for the reflectivity variations. A Deep Image Prior (DIP) based SAR image enhancement is proposed in a prior method, but it is well known that DIP is computationally expensive, sensitive to initialization and further lacks generalization. In another prior method a Convolutional Neural Network (CNN) is employed to enhance the SAR images, while yet another prior method proposed to use conditional generative adversarial networks (CGANs) to enhance image reconstruction performance.

However, observations from experimental results indicate that the above-mentioned techniques encounter challenges in generalizing across sampling schemes, particularly in continuous sampling scale scenarios: a key characteristic of freehand scanning geometries. Freehand scanning in practice can involve data collection using continuous random movements from very sparse to dense sampling scales, thus making it challenging to account for all possible sampling schemes during data collection.

SUMMARY

Embodiments of the present disclosure present technological improvements as solutions to one or more of the above-mentioned technical problems recognized by the inventors in conventional systems. For example, in one embodiment, a method for local interpolation function-based SAR imaging for irregular scanning geometries is provided. The method includes receiving for each object amongst a plurality of objects in a training dataset, (i) a first raw radar data collected at a set of sparse non-uniform spatial coordinates, and (ii) a second raw radar data collected at a set of dense uniform spatial coordinates. Further the method includes generating a noisy synthetic aperture radar (SAR) image. The noisy SAR image is generated from the first raw radar data for each object amongst the plurality of objects using Non-Uniform Fast Fourier Transform (NUFFT) based Range Migration Algorithm (RMA) (NUFFT-RMA) technique. Furthermore, the method includes generating a ground truth SAR image comprising a set of coordinates. The ground truth SAR image is generated from the second raw radar data for each object amongst the plurality of objects using Fast Fourier Transform (FFT) based RMA technique. Further the method includes iteratively training a Local Interpolation Function (LIF) neural network by updating an encoder weight and a decoder weight associated with an encoder and a decoder comprised in the LIF neural network. The LIF neural network is trained until a termination criteria is met and a trained LIF neural network is obtained. The step for iteratively training includes initially generating an LIF feature map using the encoder from the noisy SAR image for each object amongst the plurality of objects. The LIF feature map comprises a latent representation for each coordinate of the set of coordinates. Then a predicted SAR image is generated from the LIF feature map using the decoder by querying each coordinate of the set of coordinates. Further an L1 loss is computed between the predicted SAR image and the ground truth SAR image. Finally, the encoder weight and the decoder weight are updated based on the L1 loss. The termination criteria are one of (i) an L1 loss of a previous iteration is less than or equal to an L1 loss of a current iteration, or (ii) completion of a predefined number of iterations.

In another aspect, a system for local interpolation function-based SAR imaging for irregular scanning geometries is provided. The system comprises memory storing instructions; one or more communication interfaces; and one or more hardware processors coupled to the memory via the one or more communication interfaces, wherein the one or more hardware processors are configured by the instructions to receive for each object amongst a plurality of objects in a training dataset, (i) a first raw radar data collected at a set of sparse non-uniform spatial coordinates, and (ii) a second raw radar data collected at a set of dense uniform spatial coordinates. Further the system includes generating a noisy synthetic aperture radar (SAR) image. The noisy SAR image is generated from the first raw radar data for each object amongst the plurality of objects using Non-Uniform Fast Fourier Transform (NUFFT) based Range Migration Algorithm (RMA) (NUFFT-RMA) technique. Furthermore, the system includes generating a ground truth SAR image comprising a set of coordinates. The ground truth SAR image is generated from the second raw radar data for each object amongst the plurality of objects using Fast Fourier Transform (FFT) based RMA technique. Further the system includes iteratively training a Local Interpolation Function (LIF) neural network by updating an encoder weight and a decoder weight associated with an encoder and a decoder comprised in the LIF neural network. The LIF neural network is trained until a termination criteria is met and a trained LIF neural network is obtained. The step for iteratively training includes initially generating an LIF feature map using the encoder from the noisy SAR image for each object amongst the plurality of objects. The LIF feature map comprises a latent representation for each coordinate of the set of coordinates. Then a predicted SAR image is generated from the LIF feature map using the decoder by querying each coordinate of the set of coordinates. Further an L1 loss is computed between the predicted SAR image and the ground truth SAR image. Finally, the encoder weight and the decoder weight are updated based on the L1 loss. The termination criteria are one of (i) an L1 loss of a previous iteration is less than or equal to an L1 loss of a current iteration, or (ii) completion of a predefined number of iterations.

The predicted SAR image is generated based on a nearest latent representation for each coordinate amongst the set of coordinates. The nearest latent representation is generated by computing a weighted sum of a set of latent representations.

A test SAR image is obtained from the trained LIF neural network for a test raw radar data collected at a plurality of sparse non-uniform spatial coordinate corresponding to an object. The test SAR image is obtained by initially generating a noisy test SAR image from the test raw radar data using NUFFT-RMA technique. Then a test LIF feature map corresponding to the noisy test SAR image is generated using the encoder of the trained LIF neural network. Finally, the test SAR image is generated from the test LIF feature map using the decoder of the trained LIF neural network by querying each coordinate amongst the set of coordinates.

In yet another aspect, there are provided one or more non-transitory machine-readable information storage media comprising one or more instructions which when executed by one or more hardware processors cause for local interpolation function-based SAR imaging for irregular scanning geometries by receiving for each object amongst a plurality of objects in a training dataset, (i) a first raw radar data collected at a set of sparse non-uniform spatial coordinates, and (ii) a second raw radar data collected at a set of dense uniform spatial coordinates. Further the instructions which when executed by the one or more hardware processors cause includes generating a noisy synthetic aperture radar (SAR) image. The noisy SAR image is generated from the first raw radar data for each object amongst the plurality of objects using Non-Uniform Fast Fourier Transform (NUFFT) based Range Migration Algorithm (RMA) (NUFFT-RMA) technique. Furthermore, the instructions which when executed by the one or more hardware processors cause includes generating a ground truth SAR image comprising a set of coordinates. The ground truth SAR image is generated from the second raw radar data for each object amongst the plurality of objects using Fast Fourier Transform (FFT) based RMA technique. Further the instructions which when executed by the one or more hardware processors cause includes iteratively training a Local Interpolation Function (LIF) neural network by updating an encoder weight and a decoder weight associated with an encoder and a decoder comprised in the LIF neural network. The LIF neural network is trained until a termination criteria is met and a trained LIF neural network is obtained. The step for iteratively training includes initially generating an LIF feature map using the encoder from the noisy SAR image for each object amongst the plurality of objects. The LIF feature map comprises a latent representation for each coordinate of the set of coordinates. Then a predicted SAR image is generated from the LIF feature map using the decoder by querying each coordinate of the set of coordinates. Further an L1 loss is computed between the predicted SAR image and the ground truth SAR image. Finally, the encoder weight and the decoder weight are updated based on the L1 loss. The termination criteria are one of (i) an L1 loss of a previous iteration is less than or equal to an L1 loss of a current iteration, or (ii) completion of a predefined number of iterations.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for local interpolation function (LIF) based synthetic aperture radar (SAR) imaging for irregular scanning geometries according to some embodiments of the present disclosure.

FIG. 2A and FIG.2B is an exemplary flow diagram illustrating a method for training a LIF neural network for LIF based SAR imaging for irregular scanning geometries according to some embodiments of the present disclosure.

FIG. 3 illustrates a block diagram for generating a noisy SAR image using Non-Uniform Fast Fourier Transform (NUFFT) based RMA technique in accordance with some embodiments of the present disclosure.

FIG. 4 illustrates a block diagram for generating a ground truth SAR image using fast Fourier transform (FFT) based Range Migration Algorithm (RMA) technique in accordance with some embodiments of the present disclosure.

FIG. 5 illustrates a functional block diagram for local interpolation function (LIF) based synthetic aperture radar (SAR) imaging for irregular scanning geometries according to some embodiments of the present disclosure.

FIG. 6 illustrates a performance comparison of the disclosed LIF based SAR imaging against state-of-the-art methods according to some embodiments of the present disclosure.

FIG. 7 illustrates optical image for 5 objects at 70% sampling rate using the disclosed LIF based SAR imaging and state-of-the-art methods according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Irregular scanning based synthetic aperture radar (SAR) imaging is necessary due to the prevalence of freehand radar imaging using handheld radar devices. Unlike conventional SAR imaging, irregular scanning techniques yield diverse sampling scales, posing significant reconstruction challenges.

The present disclosure provides a method for freehand SAR imaging referred as Local Interpolation Function (LIF) for near-field SAR Imaging. The disclosed method is designed to achieve generalized SAR image enhancement that is invariant to sampling pattern which is a key necessity for freehand SAR imaging. In the disclosed method, initially a noisy SAR image is obtained using Non-Uniform Fast Fourier Transform (NUFFT) based Range Migration Algorithm (RMA) technique referred as NUFFT-RMA. Further, LIF based SAR image enhancement is applied to this initial noisy SAR image, through an encoder framework by projecting it onto a spatially distributed set of latent codes or representations. The encoder is trained using high-resolution SAR images obtained through dense sampling which enables it to map the noisy SAR image onto the appropriate latent representation. A decoding function is then employed to query the specific coordinates, leveraging both the coordinate location and its surrounding latent representation to predict the actual SAR image value corresponding to that coordinate. This approach allows the disclosed method to learn and adapt to arbitrary spatial coordinates. The disclosed method is used to represent noisy SAR images from different spatial coordinates in a continuous and generalized manner. This flexibility enables the disclosed method to effectively handle out-of-distribution sampling scales, contrasting with fixed up sampling networks used in prior works.

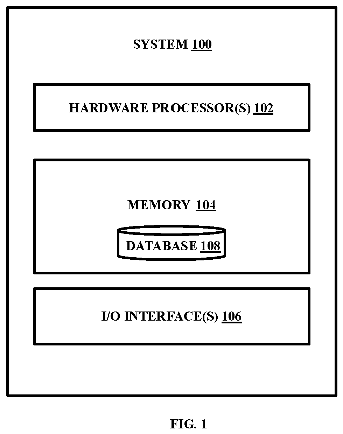

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates an exemplary block diagram of a system 100 configured for local interpolation function (LIF) based SAR imaging for irregular scanning geometries according to some embodiments of the present disclosure. In an embodiment, the system 100 includes one or more hardware processors 102, communication interface(s) or input/output (I/O) interface(s) 106, and one or more data storage devices or memory 104 operatively coupled to the one or more processors 102. The one or more hardware processors 102 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the system 100 can be implemented in a variety of computing systems, such as laptop computers, notebooks, hand-held devices, workstations, mainframe computers, servers, a network cloud and the like.

The I/O interface (s) 106 may include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes.

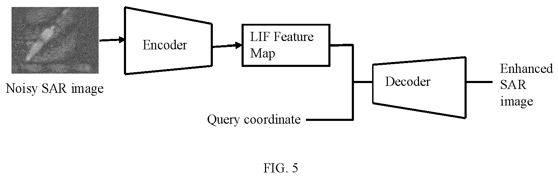

In an embodiment, the memory 104 includes a plurality of modules as depicted in FIG. 5, such as LIF neural network with an encoder and a decoder (not shown), and the like. Further, the plurality of modules includes programs or coded instructions that supplement applications or functions performed by the system 100 for executing different steps involved in the process for local interpolation function-based SAR imaging for irregular scanning geometries by the system 100. The plurality of modules, amongst other things, can include routines, programs, objects, components, and data structures, which performs particular tasks or implement particular abstract data types. The plurality of modules may also be used as, signal processor(s), node machine(s), logic circuitries, and/or any other device or component that manipulates signals based on operational instructions. Further, the plurality of modules can be used by hardware, by computer-readable instructions executed by the one or more hardware processors 102, or by a combination thereof. The plurality of modules can include various sub-modules (not shown).

Further, the memory 104 may include a database 108 or repository. The memory 104 may comprise information pertaining to input(s)/output(s) of each step performed by the processor(s) 102 of the system 100 and methods of the present disclosure. In an embodiment, the database 108 may be external (not shown) to the system 100 and coupled via the I/O interface 106. The database may include data sources corresponding to raw radar data, LIF feature map and so on.

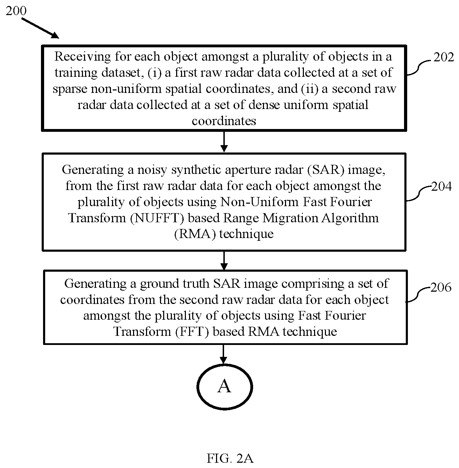

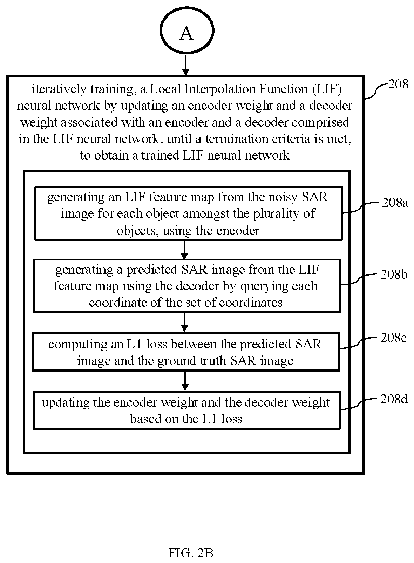

FIG. 2A and FIG.2B is an exemplary flow diagram illustrating a method 200 for training a LIF neural network for LIF based SAR imaging for irregular scanning geometries according to some embodiments of the present disclosure. In an embodiment, the system 100 comprises one or more data storage devices or the memory 104 operatively coupled to the one or more hardware processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2A, at step 202 of the method 200, one or more hardware processors 102 are configured to receive (i) a first raw radar data collected at a set of sparse non-uniform spatial coordinates, and (ii) a second raw radar data collected at a set of dense uniform spatial coordinates, for each object amongst a plurality of objects in a training dataset. The first raw radar data and the second raw radar data is received for training a LIF neural network for SAR image reconstruction. The first raw radar data and the second raw radar data are collected in a concealed or a non-concealed scene in any lighting conditions such as dark, bright and the like. The objects mentioned above can be concealed objects spoons, watches, metal plates, batteries, mobile phones, coke cans etc., in sealed packages. Additionally, the scope extends to other applications, including through-wall imaging and medical diagnostics using handheld scanners. During the training phase of the LIF neural network, the first raw radar data is gathered at specific known sparse non-uniform spatial coordinates. Also, the second raw radar data is received by collecting data uniformly without skipping any acquisitions.

For instance, let a received signal for an array element at location $(x, y)$ is expressed as,

$$s(x, y, k) = \iiint \rho(x', y', z') e^{-j2kR} dx dy dz \qquad (1)$$

Here $\rho(x', y', z')$ represent the three-dimensional object reflectivity function of the scene, R denotes the distance between the array element and the object points in a three-dimensional space and $k$ represents the wave number. By applying 2-D Fourier transform (FT) with some approximations on equation (1), $\rho(x', y', z')$ is rearranged and expressed for a given plane

$z' = Z_0$ to represent as equation (2),

$$\rho(x', y') = IFT_{2D}^{(k_x, k_y)}\left[e^{-jk_z Z_0} S(k_x, k_y, k_z)\right] \qquad (2)$$

Here $IFT_{2D}$ represents the 2D inverse FT and $k_x$, $k_y$, $k_z$ represent the wave numbers along the x, y, and z axes. In order to estimate $\rho(x',y')$ from equation (2), the Fourier transform $S(k_x, k_y, k)$ is necessary. Classically, $S(k_x, k_y, k)$ is computed from $s(x, y, k)$ using the standard 2D FFT, where the radar is scanned uniformly along $(x, y)$. This is typically referred to as Fast Fourier Transform (FFT) based RMA technique. However, for freehand SAR imaging applications, since the scanning is irregular and non-uniform, this standard approach mentioned above cannot be directly applied. Alternatively, other techniques such as Non-Uniform Fast Fourier Transform (NUFFT) based Range Migration Algorithm (RMA) technique (NUFFT-RMA) can be employed to obtain SAR imaging in such scenarios which is explained henceforth.

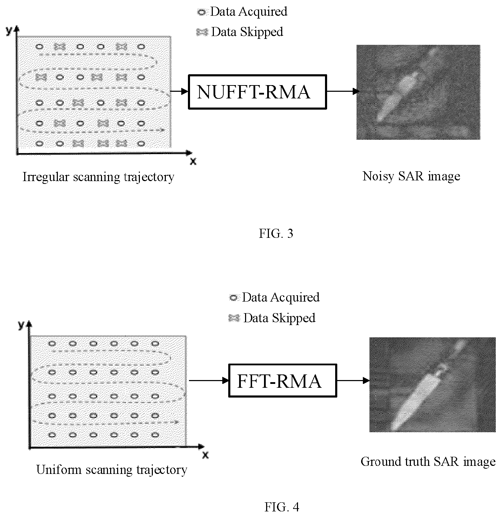

At step 204 of the method 200, one or more hardware processors are configured to generate a noisy synthetic aperture radar (SAR) image, from the first raw radar data for each object amongst the plurality of objects. The noisy SAR image is generated using Non-Uniform Fast Fourier Transform (NUFFT) based Range Migration Algorithm (RMA) technique (NUFFT-RMA). The first raw radar data is processed using the NUFFT technique to obtain $S(k_x, k_y, k_z)$ and using equation (2), the noisy SAR image $\rho(x',y')$ is generated. FIG. 3 illustrates a block diagram for generating a noisy SAR image using Non-Uniform Fast Fourier Transform (NUFFT) based RMA technique in accordance with some embodiments of the present disclosure.

Further at step 206 of the method 200, one or more hardware processors are configured to generate a ground truth SAR image comprising a set of coordinates. The ground truth SAR image is generated from the second raw radar data for each object amongst the plurality of objects using Fast Fourier Transform (FFT) based RMA technique. The high-resolution ground truth SAR image data $\rho_{hr}(x',y')$ is obtained by collecting data uniformly without skipping any acquisitions. Both $\rho(x',y')$ and $\rho_{hr}(x', y')$, along with the coordinate $(x',y')$, are then utilized in the disclosed method training stage for further enhancement and processing. FIG. 4 illustrates a block diagram for generating a ground truth SAR image using fast Fourier transform (FFT) based Range Migration Algorithm (RMA) technique in accordance with some embodiments of the present disclosure.

The method 200 utilizes a Local Interpolation Function (LIF) neural network to denoise the noisy SAR image and achieve a generalized and continuous representation of SAR images sampled across various scales. At step 208 of the method 200, one or more hardware processors are configured to iteratively train the LIF neural network using steps 208a through 208d, which is explained later. The LIF neural network is trained by updating an encoder weight and a decoder weight associated with an encoder and a decoder. The encoder and the decoder are comprised in the LIF neural network. The steps 208a through 208d are performed iteratively until a termination criteria is met and further a trained LIF neural network is obtained. At step 208a an LIF feature map is generated from the noisy SAR image for each object amongst the plurality of objects. The LIF feature map comprises a latent representation for each coordinate of the set of coordinates. The LIF feature map is generated using the encoder of the LIF neural network. The encoder $E_\theta$ is trained which maps the noisy SAR image $\rho(x',y')$ obtained for different spatial coordinates into a 2D feature map $M \in \mathbb{R}^{H \times W \times D}$ representing the LIF feature map, where $H \times W$ denotes the spatial dimensions and $D$ represents the depth of the encoder's output layer.

At step 208b a predicted SAR image is generated from the LIF feature map using the decoder of the LIF neural network by querying each coordinate of the set of coordinates. Following the encoding phase as in step 208a, a decoding function is applied to predict SAR image values $\rho_{pred}(x',y')$ at queried coordinates $(x',y')$, utilizing a nearest latent representation $z^*$ for each coordinate amongst the set of coordinates. The predicted SAR image is computed using the decoding function $f_\phi$, represented as in equation 3 given below,

$$\rho_{pred}(\boldsymbol{x}) = f_\phi(z^*, (\boldsymbol{x})) \qquad (3)$$

where $\boldsymbol{x} = \{(x',y') | 1 \leq x' \leq H, 1 \leq y' \leq W\}$. Each latent representation $z^*$ in the LIF feature map represents a local segment of the continuous image and aids in predicting the SAR image values corresponding to nearby coordinates $\boldsymbol{x}$. The nearest latent representation is generated by computing a weighted sum of a set of latent representations. To compute the nearest latent representation, four latent representations for a given coordinate is considered and a weighted sum is computed to predict the SAR image value which represented as equation 4 below,

$$\rho_{pred}(\boldsymbol{x}) = \sum_{n=1}^{4} f_\phi(z_n^*, (\boldsymbol{x})) \frac{1}{\|z_n^* - x\|} \qquad (4)$$

where the weight parameter is obtained by computing the Euclidean distance between the query coordinate $\boldsymbol{x}$ and the

corresponding latent coordinate $z_n^*$. This method enhances the LIF neural network's capability to capture nuanced variations in the input data.

The training of the LIF neural network generates a continuous and faithful representation encapsulated within the LIF feature map. This representation not only aims to reconstruct noisy SAR images accurately but also exhibit robustness and fidelity when faced with SAR images from arbitrary spatial coordinates typical of freehand imaging scenarios. To achieve this, the training method utilizes a self-supervised approach with a super-resolution objective. The encoder $E_\theta$ utilized a residual learning framework and implemented the modified ResNet architecture ("Lim et.al., "Enhanced deep residual networks for single image super-resolution," in Proceedings of the IEEE conference on computer vision and pattern recognition workshops, 2017") with 4 ResNet blocks. The decoding function $f_\phi$ employed a 5-layer Multi-Layer Perceptron (MLP) with ReLU activation and a hidden layer dimension of 128.

At step 208c an L1 loss is computed between the predicted SAR image and the ground truth SAR image. L1 loss $\mathcal{L}$ is computed between the predicted SAR image $\rho_{pred}(\boldsymbol{x})$ and the corresponding ground truth SAR image $\rho_{hr}(\boldsymbol{x})$, which is represented as below,

$$\mathcal{L} = \frac{1}{N} \sum_{n=1}^{N} \left| \rho_{pred}(\boldsymbol{x}) - \rho_{hr}(\boldsymbol{x}) \right| \qquad (5)$$

where $N$ is the number of training iterations. At step 208d the encoder weight and the decoder weight are updated based on the L1 loss. This loss function acts as a training objective to update and refine both the encoder $E_\theta$ and the decoding function $f_\phi$, with the aim of minimizing reconstruction error and enhancing the LIF neural network's ability to generalize across diverse spatial coordinates encountered in freehand SAR imaging applications. The LIF neural network is trained until the termination criteria is met. The termination criteria are one of (i) an L1 loss of a previous iteration is less than or equal to an L1 loss of a current iteration, or (ii) completion of a predefined number of iterations.

The trained LIF neural network is further deployed for testing with a test raw radar data collected at any arbitrary spatial coordinates. In the testing phase, this test raw radar data uses NUFFT-RMA to generate the noisy test SAR image. Subsequently, the obtained noisy test SAR image is fed to the trained encoder $E_\theta$ to obtain a test LIF feature map corresponding to the noisy test SAR image and projected onto the latent representation. Then, the trained decoding function $f_\phi$ to query for all $\boldsymbol{x}$ along with the nearest latent representation to estimate the test SAR image. FIG. 5 illustrates a functional block diagram for local interpolation function (LIF) based synthetic aperture radar (SAR) imaging for irregular scanning geometries according to some embodiments of the present disclosure.

**EXPERIMENTAL RESULTS:** The experimental validation of the disclosed method was conducted using an ImageVK-74 Radar ("Imagevk-74: 4d millimeter wave imaging kit," https://www.minicircuits.com/WebStore/imagevk_74. html), a Stepped Frequency Continuous Wave (SFCW) radar with a frequency range of 62 GHz to 69 GHz. The freehand SAR imaging setup emulates random down sampling from a $100 \times 100$ uniform grid (ground truth) covering a $20\,\text{cm} \times 20$ cm physical aperture. The training dataset consisted of 50 different objects such as (spoons, watches, metal plates, batteries, mobile phones, coke cans etc.) placed in a box at a distance of $Z_0$=20 cm. During the training of the LIF neural network, 10 instances were sampled each of randomly down sampled data at 20%, 40%, 60%, and 80% of the total ground truth data, resulting in approximately 2000 training instances. The LIF neural network has model complexity comparable to a prior work with conditional generative adversarial network (CGAN) implementation and is trained using Adam optimizer with a learning rate of $1e^{-4}$ for 1000 epochs having a batch size of 16.

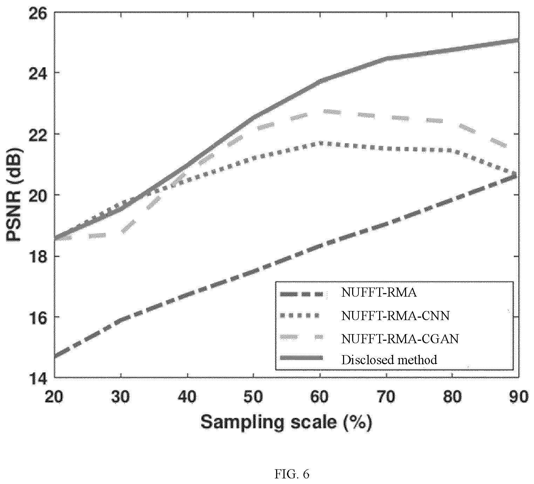

The disclosed method was evaluated across 7 different test cases at varying sampling scales from 20% to 90% at a step size of 10%. At every sampling scale, 10 random instances were considered totaling to 70 test instances (per sampling scale). The sampling scales (30%, 50%, 70%, 90%) were not included in the training phase. FIG. 6 illustrates a performance comparison of the disclosed LIF based SAR imaging against state-of-the-art methods according to some embodiments of the present disclosure. FIG. 6 provides average PSNR values vs sampling scale comparing the performance of the disclosed method against the state-of-the-art methods such as NUFFT-RMA, NUFFT-RMA with CNN and CGAN-based enhancements. NUFFT-RMA exhibited linear performance across sampling scales, with lower PSNR values compared to other methods. NUFFT-CNN and NUFFT-CGAN methods seems to saturate at higher scales, however the performance of the disclosed method improves almost linearly with sampling scale. A PSNR improvement of around 5dB across sampling scale is observed with the disclosed LIF based image enhancement over the classical NUFFT-RMA.

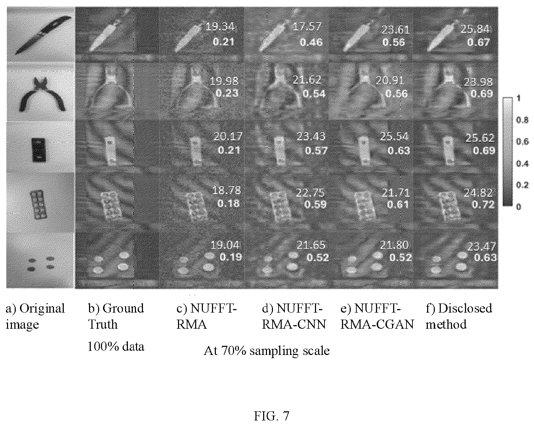

FIG. 7 illustrates optical image for 5 objects at 70% sampling rate using the disclosed LIF based SAR imaging and state-of-the-art methods according to some embodiments of the present disclosure. FIG.7 shows the qualitative representation at 70% sampling scale. This sampling scale is not included in the training set. From the figures it is observed that the disclosed method provides a better resolved image compared to the other state-of-the-art approaches. Further it is observed that an SSIM improvement of at least 0.4 can be obtained over NUFFT-RMA by using the disclosed method. Thus, from the results it can be concluded that the disclosed method is efficient in generalizing and learning a continuous representation that is invariant to sampling scales, making it efficient for any irregular SAR scanning geometries.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein efficiently reconstructs the SAR image even with irregular scanning trajectories. NUFFT-based RMA is used to obtain the initial noisy SAR image, followed by LIF based enhancement to achieve improved reconstruction. LIF leverages the generalizability of implicit neural networks and adapts well to the continuous sampling patterns inherent in irregular scanning geometry. Initially a noisy SAR image is obtained, which is then enhanced using LIF based neural network. The noisy SAR image is mapped to the 2D feature map represented as LIF feature map. Further using the decoder in the LIF neural network, an enhanced SAR image is predicted based on the LIF feature map.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

**1.** A processor implemented method (200) comprising:

receiving, via an input/output (I/O) interface, (i) a first raw radar data collected at a set of sparse non-uniform spatial coordinates, and (ii) a second raw radar data collected at a set of dense uniform spatial coordinates for each object amongst a plurality of objects in a training dataset (202);

generating, via one or more hardware processors, a noisy synthetic aperture radar (SAR) image from the received first raw radar data for each object amongst the plurality of objects using a Non-Uniform Fast Fourier Transform (NUFFT) based Range Migration Algorithm (RMA) (NUFFT-RMA) technique (204);

generating, via the one or more hardware processors, a ground truth SAR image comprising a set of coordinates from the received second raw radar data for each object amongst the plurality of objects using a Fast Fourier Transform (FFT) based RMA technique (206); and

iteratively training, via the one or more hardware processors, a Local Interpolation Function (LIF) neural network by updating an encoder weight and a decoder weight associated with an encoder and a decoder comprised in the LIF neural network, until a termination criteria is met, to obtain a trained LIF neural network (208), wherein the step of iteratively training comprises:

generating an LIF feature map from the noisy SAR image for each object amongst the plurality of objects, using the encoder, wherein the LIF feature map comprises a latent representation for each coordinate of the set of coordinates (208a);

generating a predicted SAR image from the LIF feature map using the decoder by querying each coordinate of the set of coordinates (208b);

computing an L1 loss between the predicted SAR image and the ground truth SAR image (208c); and updating the encoder weight and the decoder weight based on the L1 loss (208d);

wherein the termination criteria are one of (i) an L1 loss of a previous iteration is less than or equal to an L1 loss of a current iteration, or (ii) completion of a predefined number of iterations.

2. The processor implemented method as claimed in claim 1, wherein the predicted SAR image is generated based on a nearest latent representation for each coordinate amongst the set of coordinates.

3. The processor implemented method as claimed in claim 2, wherein the nearest latent representation is generated by computing a weighted sum of a set of latent representations.

4. The processor implemented method as claimed in claim 1, comprising obtaining a test SAR image from the trained LIF neural network for a test raw radar data collected at a plurality of sparse non-uniform spatial coordinate corresponding to an object, wherein obtaining the test SAR image comprises:

generating, via the one or more hardware processors, a noisy test SAR image from the test raw radar data using NUFFT-RMA technique;

generating, via the one or more hardware processors, a test LIF feature map corresponding to the noisy test SAR image using the encoder of the trained LIF neural network; and

generating, via the one or more hardware processors, the test SAR image from the test LIF feature map using the decoder of the trained LIF neural network by querying each coordinate amongst the set of coordinates.

5. A system (100), comprising:

a memory (104) storing instructions;

one or more communication interfaces (106); and

one or more hardware processors (102) coupled to the memory (104) via the one or more communication interfaces (106), wherein the one or more hardware processors (102) are configured by the instructions to:

receive (i) a first raw radar data collected at a set of sparse non-uniform spatial coordinates, and (ii) a second raw radar data collected at a set of dense uniform spatial coordinates, for each object amongst a plurality of objects in a training dataset;

generate a noisy synthetic aperture radar (SAR) image, from the received first raw radar data for each object amongst the plurality of objects using a Non-Uniform Fast Fourier Transform (NUFFT) based Range Migration Algorithm (RMA) (NUFFT-RMA) technique;

generate a ground truth SAR image comprising a set of coordinates from the received second raw radar data for each object amongst the plurality of objects using a Fast Fourier Transform (FFT) based RMA technique; and

iteratively train a Local Interpolation Function (LIF) neural network by updating an encoder weight and a decoder weight associated with an encoder and a decoder comprised in the LIF neural network, until a termination criteria is met, to obtain a trained LIF neural network, wherein the step of iteratively training comprises:

generating an LIF feature map from the noisy SAR image for each object amongst the plurality of objects, using the encoder, wherein the LIF feature map comprises a latent representation for each coordinate of the set of coordinates;

generating a predicted SAR image from the LIF feature map using the decoder by querying each coordinate of the set of coordinates;

computing an L1 loss between the predicted SAR image and the ground truth SAR image; and updating the encoder weight and the decoder weight based on the L1 loss;

wherein the termination criteria are one of (i) an L1 loss of a previous iteration is less than or equal to an L1 loss of a current iteration, or (ii) completion of a predefined number of iterations.

6. The system as claimed in claim 5, wherein the predicted SAR image is generated based on a nearest latent representation for each coordinate amongst the set of coordinates.

7. The system as claimed in claim 5, wherein the nearest latent representation is generated by computing a weighted sum of a set of latent representations.

8. The system as claimed in claim 5, wherein obtaining a test SAR image from the trained LIF neural network for a test raw radar data collected at a plurality of sparse non-uniform spatial coordinate corresponding to an object comprises:

generating a noisy test SAR image from the test raw radar data using NUFFT-RMA technique;

generating a test LIF feature map corresponding to the noisy test SAR image using the encoder of the trained LIF neural network; and

generating the test SAR image from the test LIF feature map using the decoder of the trained LIF neural network by querying each coordinate amongst the set of coordinates.

9. One or more non-transitory machine-readable information storage mediums comprising one or more instructions which when executed by one or more hardware processors cause:

receiving, via an input/output (I/O) interface, (i) a first raw radar data collected at a set of sparse non-uniform spatial coordinates, and (ii) a second raw radar data collected at a set of dense uniform spatial coordinates for each object amongst a plurality of objects in a training dataset;

generating, a noisy synthetic aperture radar (SAR) image from the received first raw radar data for each object amongst the plurality of objects using a Non-Uniform Fast Fourier Transform (NUFFT) based Range Migration Algorithm (RMA) (NUFFT-RMA) technique;

generating, a ground truth SAR image comprising a set of coordinates from the received second raw radar data for each object amongst the plurality of objects using a Fast Fourier Transform (FFT) based RMA technique; and iteratively training, a Local Interpolation Function (LIF) neural network by updating an encoder weight and a decoder weight associated with an encoder and a decoder comprised in the LIF neural network, until a termination criteria is met, to obtain a trained LIF neural network, wherein the step of iteratively training comprises:

generating an LIF feature map from the noisy SAR image for each object amongst the plurality of objects, using the encoder, wherein the LIF feature map comprises a latent representation for each coordinate of the set of coordinates;

generating a predicted SAR image from the LIF feature map using the decoder by querying each coordinate of the set of coordinates;

computing an L1 loss between the predicted SAR image and the ground truth SAR image; and updating the encoder weight and the decoder weight based on the L1 loss;

wherein the termination criteria are one of (i) an L1 loss of a previous iteration is less than or equal to an L1 loss of a current iteration, or (ii) completion of a predefined number of iterations.

10. The one or more non-transitory machine-readable information storage mediums as claimed in claim 9, wherein the predicted SAR image is generated based on a nearest latent representation for each coordinate amongst the set of coordinates.

**11.** The one or more non-transitory machine-readable information storage mediums as claimed in claim 10, wherein the nearest latent representation is generated by computing a weighted sum of a set of latent representations.

**12.** The one or more non-transitory machine-readable information storage mediums as claimed in claim 9, comprising obtaining a test SAR image from the trained LIF neural network for a test raw radar data collected at a plurality of sparse non-uniform spatial coordinate corresponding to an object, wherein obtaining the test SAR image comprises:

generating a noisy test SAR image from the test raw radar data using NUFFT-RMA technique;
generating a test LIF feature map corresponding to the noisy test SAR image using the encoder of the trained LIF neural network; and

generating the test SAR image from the test LIF feature map using the decoder of the trained LIF neural network by querying each coordinate amongst the set of coordinates.

SYSTEM 100

HARDWARE PROCESSOR(S) 102

MEMORY 104

DATABASE 108

I/O INTERFACE(S) 106

FIG. 1

200

Receiving for each object amongst a plurality of objects in a
training dataset, (i) a first raw radar data collected at a set of
sparse non-uniform spatial coordinates, and (ii) a second raw
radar data collected at a set of dense uniform spatial
coordinates

— 202

Generating a noisy synthetic aperture radar (SAR) image,
from the first raw radar data for each object amongst the
plurality of objects using Non-Uniform Fast Fourier
Transform (NUFFT) based Range Migration Algorithm
(RMA) technique

— 204

Generating a ground truth SAR image comprising a set of
coordinates from the second raw radar data for each object
amongst the plurality of objects using Fast Fourier
Transform (FFT) based RMA technique

— 206

A

FIG. 2A

A

iteratively training, a Local Interpolation Function (LIF) neural network by updating an encoder weight and a decoder weight associated with an encoder and a decoder comprised in the LIF neural network, until a termination criteria is met, to obtain a trained LIF neural network ⌐208

generating an LIF feature map from the noisy SAR image for each object amongst the plurality of objects, using the encoder ⌐208a

generating a predicted SAR image from the LIF feature map using the decoder by querying each coordinate of the set of coordinates ⌐208b

computing an L1 loss between the predicted SAR image and the ground truth SAR image ⌐208c

updating the encoder weight and the decoder weight based on the L1 loss ⌐208d

FIG. 2B

○ Data Acquired
⋈ Data Skipped

y

Irregular scanning trajectory

NUFFT-RMA

Noisy SAR image

FIG. 3

○ Data Acquired
⋈ Data Skipped

y

Uniform scanning trajectory

FFT-RMA

Ground truth SAR image

FIG. 4

Noisy SAR image

Encoder

LIF Feature Map

Query coordinate

Decoder

Enhanced SAR image

FIG. 5

FIG. 6

a) Original    b) Ground    c) NUFFT-    d) NUFFT-    e) NUFFT-    f) Disclosed
image        Truth        RMA          RMA-CNN    RMA-CGAN   method

             100% data         At 70% sampling scale

FIG. 7

Europäisches
Patentamt

European
Patent Office

Office européen
des brevets

# EUROPEAN SEARCH REPORT

**Application Number**

EP 25 20 3232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VASILEIOU CHRISTOS ET AL: "Efficient CNN-Based Super Resolution Algorithms for Mmwave Mobile Radar Imaging", 2022 IEEE INTERNATIONAL CONFERENCE ON IMAGE PROCESSING (ICIP), IEEE, 16 October 2022 (2022-10-16), pages 3803-3807, XP034293231, DOI: 10.1109/ICIP46576.2022.9897190 [retrieved on 2023-02-09] * the whole document *  ----- | 1-12 | INV. G01S13/90 |
| A | FAN BO ET AL: "Near-Field 3D SAR Imaging Using a Scanning Linear MIMO Array With Arbitrary Topologies", IEEE ACCESS, IEEE, USA, vol. 8, 20 December 2019 (2019-12-20), pages 6782-6791, XP011765415, DOI: 10.1109/ACCESS.2019.2961247 [retrieved on 2020-01-14] * the whole document *  ----- | 1-12 | |
| A | JOSIAH SMITH ET AL: "Efficient 3-D Near-Field MIMO-SAR Imaging for Irregular Scanning Geometries", ARXIV.ORG, CORNELL UNIVERSITY LIBRARY, 201 OLIN LIBRARY CORNELL UNIVERSITY ITHACA, NY 14853, 3 May 2023 (2023-05-03), XP091500565, DOI: 10.1109/ACCESS.2022.3145370 * the whole document *  ----- -/-- | 1-12 | **TECHNICAL FIELDS SEARCHED (IPC)** <br><br> G01S |

The present search report has been drawn up for all claims

| Place of search | Date of completion of the search | Examiner |
|---|---|---|
| Munich | 11 February 2026 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

| | Europäisches Patentamt European Patent Office Office européen des brevets | **EUROPEAN SEARCH REPORT** | **Application Number** EP 25 20 3232 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | REGMI HEM: "SquiggleMilli: Approximating SAR Imaging on Mobile Millimeter-Wave Devices", PROCEEDINGS OF THE ACM ON INTERACTIVE, MOBILE, WEARABLE AND UBIQUITOUS TECHNOLOGIES, ACMPUB27, NEW YORK, NY, USA, vol. 5, no. 3, 14 September 2021 (2021-09-14), pages 1-26, XP058855974, DOI: 10.1145/3478113 * the whole document * ----- | 1-12 | |
| A | JOSIAH SMITH: "Novel Hybrid-Learning Algorithms for Improved Millimeter-Wave Imaging Systems", ARXIV.ORG, CORNELL UNIVERSITY LIBRARY, 201 OLIN LIBRARY CORNELL UNIVERSITY ITHACA, NY 14853, 27 June 2023 (2023-06-27), XP091548724, * the whole document * ----- | 1-12 | |
| A | CN 113 111 758 B (UNIV SUN YAT SEN) 12 January 2024 (2024-01-12) * the whole document * ----- | 1-12 | TECHNICAL FIELDS SEARCHED (IPC) |
| A | XIE HONGTU ET AL: "Ship Recognition Method Based on Spiking Neural Networks in Synthetic Aperture Radar Images", 2021 CHINA AUTOMATION CONGRESS (CAC), IEEE, 22 October 2021 (2021-10-22), pages 8096-8100, XP034100459, DOI: 10.1109/CAC53003.2021.9727929 [retrieved on 2022-03-03] * the whole document * ----- | 1-12 | |

The present search report has been drawn up for all claims

| Place of search | Date of completion of the search | Examiner |
|---|---|---|
| Munich | 11 February 2026 | Rudolf, Hans |

page 2 of 2

## ANNEX TO THE EUROPEAN SEARCH REPORT
## ON EUROPEAN PATENT APPLICATION NO.

EP 25 20 3232

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2026

| Patent document cited in search report | Publication date | Patent family member(s) | Publication date |
|---|---|---|---|
| CN 113111758 B | 12-01-2024 | NONE | |

EPO FORM P0459

For more details about this annex : see Official Journal of the European Patent Office, No. 12/82

## REFERENCES CITED IN THE DESCRIPTION

**Patent documents cited in the description**

- IN 202421079087

**Non-patent literature cited in the description**

- **LIM**. Enhanced deep residual networks for single image super-resolution. *Proceedings of the IEEE conference on computer vision and pattern recognition workshops*, 2017